# EUROPÄISCHE PATENTSCHRIFT

(11) **EP 1 475 350 B1**
(45) Veröffentlichungstag und Bekanntmachung des Hinweises auf die Patenterteilung: **13.07.2005**
(21) Anmeldenummer: 03010225.5
(22) Anmeldetag: 07.05.2003
(51) Int. Cl.: C01B 15/10, C11D 3/39

(54) **Umhülltes Natriumpercarbonatgranulat mit verbesserter Lagerstabilität**
Coated sodium percarbonate granules with improved storage stability
Granules de percarbonate de sodium enrobés avec une stabilité de stockage améliorée

(43) Veröffentlichungstag der Anmeldung: 10.11.2004
(73) Patentinhaber: Degussa AG, 40474 Düsseldorf (DE)
(72) Erfinder: Zimmermann, Klaus, Dr., 63517 Rodenbach (DE); Lattich, Jürgen, 61130 Nidderau (DE); Jakob, Harald, Dr., 63594 Hasselroth (DE)

(56) Entgegenhaltungen:
- WO-A-96/06801
- US-A- 5 380 456
- US-A- 5 505 875
- US-A1- 2002 041 843

## Beschreibung

Die Erfindung betrifft ein umhülltes Natriumpercarbonatgranulat mit verbesserter Lagerstabilität und ein Verfahren zur Herstellung dieses Natriumpercarbonatgranulats.

Natriumpercarbonat wird als Bleichmittel und als bleichwirksamer Bestandteil in Wasch- und Reinigungsmitteln verwendet. Natriumpercarbonat weist dabei den Nachteil auf, dass es in Kontakt mit Feuchtigkeit und mit Bestandteilen der Wasch- und Reinigungsmittelzusammensetzungen zur Zersetzung neigt, was zu einem Verlust an Aktivsauerstoff und damit an Bleichwirkung führt. Natriumpercarbonat wird deshalb in diesen Anwendungen vorzugsweise als ein mit einer stabilisierenden Hüllschicht umhülltes Granulat eingesetzt, um eine verbesserte Lagerstabilität in Wasch- und Reinigungsmitteln zu erzielen.

Aus EP-A 0 863 842 ist bekannt, dass sich Natriumpercarbonatgranulat mit verbesserter Lagerstabilität herstellen lässt, indem auf einen durch Wirbelschichtsprühgranulation hergestellten Kern aus Natriumpercarbonat eine fest daran haftende Hüllschicht aufgebracht wird, die im wesentlichen aus Natriumsulfat besteht.

In WO 96/06801 werden umhüllte Natriumpercarbonatgranulate mit verbesserter Stabilität beschrieben, die aufgebaut sind aus einem Kern aus einem Natriumpercarbonatgranulat, einer inneren Hüllschicht, die ein Sulfat oder Silikat enthält sowie einer äußeren Hüllschicht, die eine Verbindung (B) ausgewählt aus Salzen von Mono- und Dicarbonsäuren mit 4 oder mehr Kohlenstoffatomen und eine Verbindung (C) ausgewählt aus Salzen von sulfatierten Ölen, α-Olefinsulfonsäuren und Mono- und Dialkylsulfosuccinaten enthält. Die in der Beschreibung angeführten Beispiele zeigen, dass die Anwesenheit der Verbindungen (B) notwendig ist, um eine ausreichende Lagerstabilität zu erreichen und dass Granulate, die in der äußeren Schicht nur die Verbindung (C) und keine Verbindung (B) enthalten, eine unzureichende Lagerstabilität aufweisen.

JP-A 06-263434 beschreibt lagerstabile Natriumpercarbonatgranulate, die aufgebaut sind, aus einem tensidhaltigen Natriumpercarbonatgranulat als Kern, einer inneren Hüllschicht aus einem Sulfat und einer äußeren Hüllschicht aus einem anionischen Tensid. Das Kernmaterial wird dabei durch Kristallisation und anschließende Granulation unter Zusatz des Tensids hergestellt. Aus den in der Beschreibung angeführten Beispielen und Vergleichsbeispielen geht hervor, dass das Kernmaterial unter Zusatz eines Tensids hergestellt werden muss, damit das erhaltene umhüllte Natriumpercarbonat eine ausreichende Lagerstabilität aufweist und dass Granulate mit einem tensidfreien Natriumpercarbonatkern, einer inneren Hüllschicht aus einem Sulfat und einer äußeren Hüllschicht aus einem anionischen Tensid eine unzureichende Lagerstabilität aufweisen.

Bei den in EP-A 0 863 842 beschriebenen Natriumpercarbonatgranulaten besteht noch ein Bedarf an einer Verbesserung der Lagerstabilität. Die in WO 96/06801 beschriebenen Natriumpercarbonatgranulate haben den Nachteil, dass sie aufwendig herzustellen sind, da für die Umhüllung der Natriumpercarbonatgranulate mindestens drei unterschiedliche Verbindungen erforderlich sind.

Die in JP-A 06-263434 beschriebenen Natriumpercarbonatgranulate weisen den Nachteil auf, dass sie im Natriumpercarbonatkern mit dem Tensid eine organische Verbindung enthalten. Dies wirkt sich nachteilig auf die innere Stabilität der Natriumpercarbonatgranulate aus und führt zu Einschränkungen bei der Lagerung von großen Mengen des Granulats in Silos. Für die Lagerung in Silos muss das Natriumpercarbonatgranulat eine hohe innere Stabilität, d.h. eine geringe Wärmefreisetzung bei der Lagerung aufweisen, da es sonst im Silo zu einer Zersetzung des Natriumpercarbonatgranulats durch selbstbeschleunigende Erwärmung kommen kann.

Aufgabe der Erfindung war es deshalb, ein umhülltes Natriumpercarbonatgranulat mit verbesserter Lagerstabilität bereit zu stellen, das sich in einfacher Weise herstellen lässt und das die Eigenschaften hohe Lagerstabilität in Wasch- und Reinigungsmittelzusammensetzungen und hohe innere Stabilität bei der Lagerung in Silos miteinander verbindet.

Es wurde nun überraschend gefunden, dass sich diese Aufgabe lösen lässt durch ein umhülltes Natriumpercarbonatgranulat, umfassend
a) einen durch Wirbelschichtsprühgranulation hergestellten Kern, enthaltend als Hauptbestandteil Natriumpercarbonat,
b) eine innere Hüllschicht, enthaltend als Hauptbestandteil ein anorganisches, hydratbildendes Salz und
c) eine äußere Hüllschicht, enthaltend als Hauptbestandteil mindestens ein Tensid, das im Molekül ein oder mehrere Sulfat- oder Sulfonatgruppen in Form eines Alkalimetall-, Erdalkalimetall- oder Ammoniumsalzes enthält.

Die Erfindung umfasst außerdem ein Verfahren zur Herstellung von umhüllten Natriumpercarbonatgranulat mit verbesserter Lagerstabilität, umfassend die Schritte
a) Herstellen eines Kernmaterials durch Wirbelschichtsprühgranulation, wobei eine wässrige Wasserstoffperoxidlösung und eine wässrige Sodalösung in eine Wirbelschicht aus Natriumpercarbonatpartikeln versprüht wird,
b) Aufbringen einer inneren Hüllschicht auf das Kernmaterial aus Schritt a) durch Aufsprühen einer wässrigen Lösung in der mindestens ein hydratbildendes anorganisches Salz gelöst ist und
c) Aufbringen einer äußeren Hullschicht auf das umhüllte Material aus Schritt b) durch Aufsprühen einer wässrigen Mischung, in der mindestens ein Tensid gelöst oder emulgiert ist, das im Molekül ein oder mehrere Sulfat- oder Sulfonatgruppen in Form eines Alkalimetall-, Erdalkalimetall- oder Ammoniumsalzes enthält.

Die Erfindung bezieht sich darüber hinaus auch auf die Verwendung der erfindungsgemäßen Natriumpercarbonatgranulate als Bleichmittel oder als bleichwirksame Bestandteile in Wasch- und Reinigungsmitteln, sowie auf Bleichmittel und Wasch- und Reinigungsmittel, die die erfindungsgemäßen Natriumpercarbonatgranulate enthalten.

Die erfindungsgemäßen Natriumpercarbonatgranulate umfassen einen durch Wirbelschichtsprühgranulation hergestellten Kern, der als Hauptbestandteil Natriumpercarbonat enthält. Die Herstellung des Kernmaterials erfolgt in bekannter Weise durch Wirbelschichtsprühgranulation, wobei eine wässrige Wasserstoffperoxidlösung und eine wässrige Natriumcarbonatlösung in eine Wirbelschicht versprüht werden, die Keime enthält, deren Abmessungen geringer sind, als die der herzustellenden Teilchen des Kernmaterials und wobei gleichzeitig Wasser verdampft wird. Als Keimmaterial wird vorzugsweise Natriumpercarbonat verwendet. Die Herstellung des Kernmaterials erfolgt vorzugsweise nachdem in EP-A 0 716 640 beschriebenen Verfahren.

Der Anteil des Kernmaterials am erfindungsgemäßen umhüllten Natriumpercarbonatgranulat liegt vorzugsweise im Bereich von 80 bis 99,5 Gew.-%, besonders bevorzugt im Bereich von 90 bis 99 Gew.-% und insbesondere im Bereich von 92 bis 98 Gew.-%. Der Anteil von Natriumpercarbonat im Kern der erfindungsgemäßen Natriumpercarbonatgranulate beträgt vorzugsweise mehr als 80 Gew.-%, besonders bevorzugt mehr als 95 Gew.-% und insbesondere mehr als 98 Gew.-%. Der Anteil an organischen Kohlenstoffverbindungen im Kern beträgt vorzugsweise weniger als 1 Gew.-%, besonders bevorzugt weniger als 0,1 Gew.-% und insbesondere weniger als 0,01 Gew.-%.

In einer bevorzugten Ausführungsform enthält der Kern geringe Mengen an Additiven, die auf den Aktivsauerstoffgehalt stabilisierend wirken, wobei der Anteil an stabilisierenden Additiven im Kern vorzugsweise weniger als 2 Gew.-% beträgt. Als stabilitätserhöhende Additive werden vorzugsweise Magnesiumsalze, Wasserglas, Stannate, Pyrophosphate, Polyphosphate sowie Chelatkomplexbildner aus der Reihe der Hydroxycarbonsäuren, Aminocarbonsäuren, Aminophosphonsäuren, Phosphonocarbonsäuren und Hydroxyphosphonsäuren sowie deren Alkalimetall-, Ammonium- oder Magnesiumsalze verwendet. In einer besonders bevorzugten Ausführungsform enthält der Kern als stabilisierendes Additiv ein Alkalimetallsilikat, vorzugsweise Wasserglas mit einem SiO₂/Na₂O-Modul im Bereich von 1 bis 3, in einer Menge von 0,1 bis 1 Gew.-%. In der am meisten bevorzugten Ausführungsform enthält der Kern zusätzlich zu dieser Menge an Alkalimetallsilikat noch eine Magnesiumverbindung in einer Menge von 50 bis 2000 ppm Mg²⁺.

Die erfindungsgemäßen umhüllten Natriumpercarbonatgranulate umfassen zusätzlich zum Kern aus Natriumpercarbonat noch eine innere Hüllschicht, die als Hauptbestandteil ein anorganisches, hydratbildendes Salz enthält und eine äußere Hüllschicht, die als Hauptbestandteil mindestens ein Tensid enthält, das im Molekül ein oder mehrere Sulfat- oder Sulfonatgruppen in Form eines Alkalimetall-, Erdalkalimetall- oder Ammoniumsalzes aufweist. Zusätzlich zu dieser inneren und äußeren Hüllschicht können die erfindungsgemäßen Natriumpercarbonatgranulate noch eine oder mehrere weitere Hüllschichten enthalten, wobei diese sowohl zwischen dem Kern und der inneren Hüllschicht, als auch zwischen der inneren und der äußeren Hüllschicht sowie außerhalb der äußeren Hüllschicht angeordnet sein können.

Zwischen den Hüllschichten sowie zwischen der innersten Hüllschicht und dem Kern kann eine scharfe Grenze existieren, an der sich die Zusammensetzung sprunghaft ändert. In der Regel wird sich jedoch zwischen den einzelnen Hüllschichten, sowie zwischen der innersten Hüllschicht und dem Kern jeweils eine Übergangszone ausbilden, die die Komponenten beider aneinander grenzenden Schichten enthält. Solche Übergangszonen entstehen beispielsweise durch das Auftragen einer Hüllschicht in Form einer wässrigen Lösung, wobei zu Anfang des Schichtaufbaus ein Teil der darunter liegenden Schicht angelöst wird, so dass eine Übergangszone entsteht, die die Bestandteile beider Schichten enthält. Zwischen dem Kern und der inneren Hüllschicht kann sich so eine Übergangsschicht bilden, die Natriumpercarbonat, Natriumcarbonat, Natriumhydrogencarbonat sowie das anorganische hydratbildende Salz der inneren Hüllschicht enthält. Zwischen der inneren Hüllschicht und der äußeren Hüllschicht kann sich in ähnlicher Weise eine Übergangsschicht ausbilden, die das anorganische hydratbildende Salz der inneren Hüllschicht und das Tensid der äußeren Hüllschicht enthält.

Innere Hüllschicht und äußere Hüllschicht sind vorzugsweise so ausgebildet, dass sie das darunter liegende Material zu mehr zu als 95 %, vorzugsweise zu mehr als 98 % und insbesondere vollständig bedecken.

Die innere Hüllschicht der erfindungsgemäßen umhüllten Natriumpercarbonatgranulate enthält als Hauptbestandteil ein anorganisches, hydratbildendes Salz. Der Anteil der inneren Hüllschicht am erfindungsgemäßen umhüllten Natriumpercarbonatgranulat liegt vorzugsweise im Bereich von 1 bis 10 Gew.-%, besonders bevorzugt im Bereich von 2 bis 7 Gew.-%. Der Anteil an anorganischem, hydratbildendem Salz am Material der inneren Hüllschicht beträgt vorzugsweise mindestens 50 Gew.-%, besonders bevorzugt mindestens 90 Gew.-%. Das anorganische, hydratbildende Salz der inneren Hüllschicht wird vorzugsweise ausgewählt aus der Reihe Natriumsulfat, Natriumcarbonat, Natriumhydrogencarbonat oder Magnesiumsulfat. Geeignet sich auch Mischungen und Mischsalze dieser Verbindungen. Besonders bevorzugt enthält die innere Hüllschicht Natriumsulfat als anorganisches hydratbildendes Salz.

Die äußere Hüllschicht der erfindungsgemäßen umhüllten Natriumpercarbonatgranulate enthält als Hauptbestandteil mindestens ein Tensid, das im Molekül ein oder mehrere Sulfat- oder Sulfonatgruppen in Form eines Alkalimetall-, Erdalkalimetall- oder Ammoniumsalzes enthält. Der Anteil der äußeren Hüllschicht am erfindungsgemäßen umhüllten Natriumpercarbonatgranulat liegt vorzugsweise im Bereich von 0,1 bis 10 Gew.-%, besonders bevorzugt 0,5 bis 5 Gew.-% und insbesondere 1 bis 3 Gew.-%. Der Tensidanteil im Material der äußeren Hüllschicht beträgt vorzugsweise mindestens 50 Gew.-% und besonders bevorzugt mindestens 80 Gew.-%. In einer bevorzugten Ausführungsform enthält die äußere Hüllschicht eine Mischung von Tensiden, wobei die Tensidmischung zu mehr als 50 Gew.-% aus Tensiden besteht, die im Molekül ein oder mehrere Sulfat- oder Sulfonatgruppen in Form eines Alkalimetall-, Erdalkalimetall- oder Ammoniumsalzes enthalten. Besonders bevorzugt liegen die Sulfat- oder Sulfonatgruppen des Tensids in der äußeren Hüllschicht in Form eines Alkalimetallsalzes, am meisten bevorzugt in Form des Natriumsalzes vor.

Als Tenside mit Sufonatgruppen werden in der äußeren Hüllschicht vorzugsweise Alkylbenzolsulfonate, Alkansulfonate, α-Olefinsulfonate, α-Sulfofettsäureester oder Sulfosuccinate eingesetzt. Bei Alkylbenzolsulfonaten werden bevorzugt solche mit einer geradkettigen oder verzweigten Alkylgruppe mit 8 bis 20 Kohlenstoffatomen, besonders bevorzugt mit 10 bis 16 Kohlenstoffatomen verwendet. Bevorzugte Alkansulfonate sind solche mit gradkettigen Alkylketten mit 12 bis 18 Kohlenstoffatomen. Bei α-Olefinsulfonaten werden vorzugsweise die Reaktionsprodukte der Sulfonierung von α-Olefinen mit 12 bis 18 Kohlenstoffatomen eingesetzt. Bei den α-Sulfofettsäureestern werden Sulfonierungsprodukte von Fettsäureestern aus Fettsäuren mit 12 bis 18 Kohlenstoffatomen und kurzkettigen Alkoholen mit 1 bis 3 Kohlenstoffatomen bevorzugt.

Als Tenside mit einer Sulfatgruppe im Molekül werden bevorzugt Alkylsulfate und Ethersulfate eingesetzt. Bevorzugte Alkylsulfate sind solche mit geradkettigen Alkylresten mit 12 bis 18 Kohlenstoffatomen. Bevorzugte Ethersulfate sind die Alkylethersulfate, die durch Ethoxylierung von linearen Alkoholen mit 12 bis 18 Kohlenstoffatomen mit 2 bis 6 Ethylenoxideinheiten und anschließende Sulfatierung erhalten werden.

Neben den Tensiden mit Sulfat oder Sulfonatgruppen kann die äußere Hüllschicht noch andere anionische Tenside, sowie nicht-ionische Tenside, kationische Tenside und amphoterische Tenside enthalten.

In einer weiteren Ausführungsform der Erfindung entsprechend DE 102 61 161 weisen die umhüllten Natriumpercarbonatgranulate über der inneren Hüllschicht eine zusätzliche Hüllschicht auf, die als Hauptbestandteil ein Alkalimetallsilikat mit einem Modul SiO₂ zu Alkalimetalloxid von mehr als 2,5 enthält. Die zusätzliche Hüllschicht kann dabei entweder zwischen der inneren und der äußeren Hüllschicht liegen oder über der äußeren Hüllschicht angeordnet sein. Der Anteil der zusätzlichen Hüllschicht am erfindungsgemäßen umhüllten Natriumpercarbonatgranulat liegt vorzugsweise im Bereich von 0,2 bis 3 Gew.-%. Der Anteil an Alkalimetallsilikat im Material der zusätzlichen Hüllschicht beträgt vorzugsweise mehr als 50 Gew.-% und besonders bevorzugt mehr als 80 Gew.-%. Als Alkalimetallsilikat wird in der zusätzlichen Hüllschicht vorzugsweise Natriumwasserglas eingesetzt.

Die erfindungsgemäßen Natriumpercarbonatgranulate weisen vorzugsweise einen mittleren Partikeldurchmesser im Bereich von 0,3 bis 2 mm, besonders bevorzugt im Bereich von 0,5 bis 1 mm auf. Die erfindungsgemäßen Natriumpercarbonatgranulate enthalten vorzugsweise nur einen geringen Anteil an feinen Partikeln. Bevorzugt weisen mehr als 90 % der Partikel des erfindungsgemäßen Natriumpercarbonats einen Durchmesser von mehr als 0,2 mm auf.

Die Erfindung betrifft weiterhin ein Verfahren zur Herstellung von umhülltem Natriumpercarbonatgranulat mit verbesserter Lagerstabilität, welches folgende Schritte umfasst:
a) Herstellen eines Kernmaterials durch Wirbelschichtsprühgranulation, wobei eine wäßrige Wasserstoffperoxidlösung und eine wässrige Sodalösung in eine Wirbelschicht aus Natriumpercarbonatpartikeln versprüht wird,
b) Aufbringen einer inneren Hüllschicht auf das Kernmaterial aus Schritt a) durch Aufsprühen einer wässrigen Lösung, in der mindestens ein hydratbildendes, anorganisches Salz gelöst ist und
c) Aufbringen einer äußeren Hüllschicht auf das umhüllte Material aus Schritt b) durch Aufsprühen einer wässrigen Mischung, in der mindestens ein Tensid gelöst oder emulgiert ist, das im Molekül ein oder mehrere Sulfat- oder Sulfonatgruppen in Form eines Alkalimetall-, Erdalkalimetall- oder Ammoniumsalzes enthält.

Die Herstellung des Kernmaterials aus Wasserstoffperoxid und Soda erfolgt in bekannter Weise nach dem Verfahren der Wirbelschichtsprühgranulation und vorzugsweise nach dem in EP-A 0 716 640 beschriebenen Verfahren. Wasserstoffperoxid und Natriumcarbonatlösung werden dabei vorzugsweise im Molverhältnis H₂O₂ zu Na₂CO₃ von 1,4 bis 1,7, besonders bevorzugt 1,5 bis 1,65 umgesetzt. Wasserstoffperoxid wird als wässrige Lösung mit vorzugsweise 30 bis 75 Gew.-% H₂O₂ besonders bevorzugt 40 bis 70 Gew.-% H₂O₂ eingesetzt. Die Wasserstoffperoxidlösung kann zusätzlich stabilisierende Additive, wie z.B. Komplexbildner oder Magnesiumverbindungen enthalten. Natriumcarbonat wird vorzugsweise als wässrige Lösung mit einer Konzentration zwischen 10 Gew.-% Natriumcarbonat und der Sättigungskonzentration von Natriumcarbonat besonders bevorzugt zwischen 20 Gew.-% Natriumcarbonat und der Sättigungskonzentration von Natriumcarbonat eingesetzt. Die Natriumcarbonatlösung kann ebenfalls stabilisierende Additive, wie z.B. Wasserglas enthalten. Bei dem Verfahren der Wirbelschichtsprühgranulation wird das mit den Einsatzstoffen eingebrachte Wasser durch Zufuhr eines Trocknungsgases in die Wirbelschicht verdampft und abgeführt. Als Trocknungsgas werden vorzugsweise Luft oder ein Verbrennungsgas verwendet, das durch Verbrennen eines Brennstoffes wie z.B. Erdgas mit Luft erhalten wird. Das Trocknungsgas wird vorzugsweise mit einer Temperatur zwischen 120 und 400 °C, besonders bevorzugt zwischen 200 und 400 °C der Wirbelschicht zugeführt. Die Temperatur in der Wirbelschicht wird vorzugsweise zwischen 40 und 95 °C, besonders zwischen 40 und 80 °C und insbesondere zwischen 50 und 70 °C gehalten.

In einer bevorzugten Ausführungsform wird der Wirbelschicht Keimmaterial in einer Menge zugeführt, die zur Ausbildung von Granulaten mit einer mittleren Partikelgröße im Bereich von 0,2 bis 2 mm führt. Der Austrag des Kernmaterials aus der Wirbelschicht erfolgt vorzugsweise nach einem klassierenden Verfahren und besonders bevorzugt nach dem in EP-A 0 938 922 beschriebenen Verfahren, so dass vorzugsweise mehr als 90 Gew.-% der aus der Wirbelschicht ausgetragenen Kernmaterialpartikel einen Durchmesser von über 0,2 mm aufweisen.

Das Aufbringen der inneren Hüllschicht erfolgt durch Aufsprühen einer wässrigen Lösung, in der mindestens ein hydratbildendes, anorganisches Salz gelöst ist. Vorzugsweise wird die innere Hüllschicht durch Aufsprühen einer wässrigen Natriumsulfatlösung aufgebracht. Bevorzugt wird bereits während des Aufsprühens der wässrigen Lösung der größte Teil des darin enthaltenen Wassers durch Wärmezufuhr verdampft, so dass während des Aufbringens der inneren Hüllschicht nur ein geringer Teil des Kernmaterials wieder angelöst wird und sich bereits während des Aufsprühens eine feste Hüllschicht aus dem hydratbildenden, anorganischen Salz ausbildet. Das Aufbringen der inneren Hüllschicht erfolgt vorzugsweise durch Versprühen der wässrigen Lösung des hydratbildenden, anorganischen Salzes in einer Wirbelschicht und besonders bevorzugt nachdem in EP-A 0 970 917 beschriebenen Verfahren, mit dem bereits mit geringen Mengen an Hüllschichtmaterial eine dichte Hüllschicht erreicht werden kann. Das Aufbringen der inneren Hüllschicht in einer Wirbelschicht erfolgt vorzugsweise unter Zufuhr eines Trocknungsgases zur Wirbelschicht, so dass sich in der Wirbelschicht eine Temperatur im Bereich von 30 bis 90 °C einstellt.

Das Aufbringen der äußeren Hüllschicht nach dem erfindungsgemäßen Verfahren erfolgt durch Aufsprühen einer wässrigen Mischung, die mindestens ein Tensid enthält, das im Molekül ein oder mehrere Sulfat- oder Sulfonatgruppen in Form eines Alkalimetall-, Erdalkalimetall- oder Ammoniumsalzes enthält, auf das mit einer inneren Hüllschicht umhüllte Granulat. Als Tenside werden vorzugsweise die bereits oben genannten Alkylbenzolsulfonate, Alkylsulfonate, α-Olefinsulfonate, Sulfosuccinate, Alkylsulfate und Ethersulfate einzeln oder in Mischungen eingesetzt. Die Tenside, bzw. Tensidmischungen können sowohl als wässrige Lösungen als auch als wässrige Emulsionen aufgesprüht werden. Feste, in Wasser schwer lösliche Tenside lassen sich durch Erwärmen über den Schmelzpunkt, durch den Zusatz eines Hilfstensids oder durch eine Kombination dieser beiden Maßnahmen in Gegenwart von Wasser in sprühfähige wässrige Emulsionen überführen. Beim Aufbringen der äußeren Hüllschicht wird vorzugsweise bereits beim Aufsprühen der wässrigen Tensidmischung der größte Teil des in der wässrigen Mischung enthaltenen Wassers durch Wärmezufuhr verdampft, so dass nur ein geringer Teil der inneren Hüllschicht wieder angelöst wird und sich bereits während des Aufbringens der äußeren Hüllschicht eine feste oder wachsartige, tensidhaltige äußere Hüllschicht ausbildet. Vorzugsweise erfolgt das Aufbringen der äußeren Hüllschicht durch Aufsprühen der wässrigen Tensidmischung in einer Wirbelschicht, in der das mit der inneren Hüllschicht umhüllte Material vorgelegt wird. Besonders bevorzugt erfolgt das Aufbringen der äußeren Hullschicht nach dem in EP-A 0 970 917 beschriebenen Verfahren, mit dem sich bereits mit geringen Mengen an Tensid dichte äußere Hüllschichten erreichen lassen. Beim Aufbringen der äußeren Hullschicht durch Versprühen der wässrigen Tensidmischung in einer Wirbelschicht wird der Wirbelschicht vorzugsweise ein Trocknungsgas zugeführt, so dass sich in der Wirbelschicht eine Temperatur im Bereich von 30 bis 90 °C einstellt.

In einer bevorzugten Ausführungsform entsprechend WO 02/051745 umfasst das erfindungsgemäße Verfahren zur Herstellung von umhülltem Natriumpercarbonatgranulat einen zusätzlichen Schritt einer thermischen Nachbehandlung bei einer Temperatur von 70 bis 120 °C, vorzugsweise 80 bis 95 °C für einen Zeitraum von mindestens 2 Minuten, vorzugsweise 5 bis 60 Minuten, der nach Schritt a) der Herstellung des Kernmaterials durch Wirbelschichtsprühgranulation durchgeführt wird. Vorzugsweise wird die thermische Nachbehandlung nach dem Schritt b) des Aufbringens einer inneren Hüllschicht und besonders bevorzugt nach dem Schritt c) des Aufbringens der äußeren Hüllschicht durchgeführt.

Gegenstand der Erfindung ist darüber hinaus auch die Verwendung der erfindungsgemäßen umhüllten Natriumpercarbonatgranulate, bzw. der nach dem erfindungsgemäßen Verfahren hergestellten umhüllten Natriumpercarbonatgranulate als Bleichmittel und als bleichwirksame Bestandteile in Wasch- und Reinigungsmitteln.

Gegenstand der Erfindung sind weiterhin Bleichmittel mit verbesserter Lagerstabilität, die 15 bis 99 Gew.-% der erfindungsgemäßen umhüllten Natriumpercarbonatgranulate, bzw. der nach dem erfindungsgemäßen Verfahren hergestellten Natriumpercarbonatgranulate enthalten.

Ebenfalls Gegenstand der Erfindung sind Wasch- und Reinigungsmittel mit verbesserter Lagerstabilität, die 1 bis 40 Gew.-% der erfindungsgemäßen umhüllten Natriumpercarbonatgranulate, bzw. der nach dem erfindungsgemäßen Verfahren hergestellten umhüllten Natriumpercarbonatgranulate enthalten.

Die erfindungsgemäßen umhüllten Natriumpercarbonatgranulate und die nach dem erfindungsgemäßen Verfahren hergestellten umhüllten Natriumpercarbonatgranulate weisen eine verbesserte Lagerstabilität in Wasch- und Reinigungsmitteln auf. In handelsüblichen, zeolithhaltigen Waschmittelabmischungen, die in handelsüblichen Waschmittelpaketen gelagert werden, zeigen die erfindungsgemäßen umhüllten Natriumpercarbonatgranulate bei einer Lagerung bei 35 °C und 80 % relativer Feuchte über einen Zeitraum von 8 Wochen ein Aktivsauerstoffverlust von weniger als 20 %, d.h. der Restaktivsauerstoff nach achtwöchiger Lagerung beträgt mehr als 80 % der ursprünglichen Aktivsauerstoffmenge.

Die erfindungsgemäßen umhüllten Natriumpercarbonatgranulate und die nach dem erfindungsgemäßen Verfahren hergestellten umhüllten Natriumpercarbonatgranulate zeigen gleichzeitig eine hohe innere Stabilität, d.h. sie zeigen bei Lagerung in Substanz nur eine geringe Wärmefreisetzung durch Zersetzungsreaktion. Nach 48 Stunden Lagerung bei 40 °C betragt die von den erfindungsgemäßen umhüllten Natriumpercarbonatgranulaten freigesetzte Wärmemenge gemessen nach dem TAM-Verfahren weniger als 5 µW/g und vorzugsweise weniger als 3 µW/g. Die Bestimmung der Wärmefreisetzung nach TAM-Verfahren erfolgt mikrokalorimetrisch mittels Thermal Activity Monitor der Firma Thermometric AB, Järfälla (SE), während 48 Stunden Lagerung in einer Messkuvette bei 40°C.

Hohe Lagerstabilität und gleichzeitig hohe innere Stabilität können bei den erfindungsgemäßen umhüllten Natriumpercarbonatgranulaten bereits mit geringen Mengen an Umhüllungsmitteln und Additiven erzielt werden. Die erfindungsgemäßen umhüllten Natriumpercarbonatgranulate, weisen deshalb einen hohen Gehalt an Natriumpercarbonat und als Folge einen hohen Aktivsauerstoffgehalt auf. Der Aktivsauerstoffgehalt, bestimmt durch Redoxtitration des nach dem Auflösen des Granulats in Wasser freigesetzten Wasserstoffperoxids, liegt vorzugsweise bei mehr als 13,0 Gew.-% und beträgt besonders bevorzugt mindestens 13,5 Gew.-%.

Erfindungsgemäße umhüllte Natriumpercarbonatgranulate, die neben der inneren und äußeren Hullschicht keine weiteren Hüllschichten aufweisen, zeigen kurze Lösezeiten beim Auflösen des Granulats in Wasser. Die konduktometrisch bestimmten Zeiten bis zur Auflösung von 95 % des Granulats in Wasser von 15 °C liegen bei diesen erfindungsgemäß umhüllten Natriumpercarbonatgranulaten um weniger als 50 % über den Zeiten für die Auflösung der nicht-umhüllten Natriumpercarbonat-Kernmaterialien.

Erfindungsgemäße umhüllte Natriumpercarbonatgranulate, die eine zusätzliche Hüllschicht aufweisen, die als Hauptbestandteil ein Alkalimetallsilikat mit einem Modul von mehr als 2,5 enthält, zeigen dagegen eine verzögerte Auflösung in Wasser mit Lösezeiten von vorzugsweise mehr als 5 Minuten, besonders bevorzugt mehr als 10 Minuten. Die Granulate mit verzögerter Auflösung zeigen Vorteile bei der Verwendung in Wasch- und Reinigungsmitteln, die oxidationsempfindliche Enzyme enthalten. Durch die verzögerte Auflösung des Granulats können die Enzyme über einen längeren Zeitraum wirken, bevor sie durch die freigesetzte Aktivsauerstoffverwendung deaktiviert werden.

### Beispiele

a) Bestimmung der Lösezeit:
2 g nicht-umhülltes oder umhülltes Natriumpercarbonat werden in 1 l Wasser von 15 °C gerührt. Die Lösezeit wird definiert als die Zeit, zu welcher 95 % gelöst sind; die Bestimmung erfolgt konduktometrisch.
Zum Vergleich der Lösezeit von zwei unterschiedlich hergestellten/umhüllten Produkten müssen diese eine vergleichbare Körnung aufweisen; sofern erforderlich, werden enge Siebfraktionen miteinander verglichen.

b) Bestimmung der Lagerstabilität in Waschmittelabmischungen:
Ein phosphatfreies aber zeolithhaltiges Waschmittelpulver, Aktivator TAED und das umhüllte Natriumpercarbonat werden in einer solchen Menge gemischt, dass das Gemisch 5 % TAED enthält und der Aktivsauerstoffgehalt etwa 2,35 Gew.-% beträgt.

| Bestandteile im Waschmittelpulver in Gew.-%: | |
|---|---|
| Anionische Tenside | 12 |
| Nichtionische Tenside | 8 |
| Zeolith A | 36 |
| Soda | 10 |
| Natriumsilikate | 3 |
| Rest incl. Feuchte | 31 |

800 g des jeweiligen Gemischs werden in handelsüblichen, wasserabweisend imprägnierten und verklebten E1-Waschmittelpaketen bei 35 °C und 80 % relativer Feuchte im Klimaschrank gelagert. Der Aktivsauerstoffgehalt wird in üblicher Weise permanganometrisch bestimmt. Aus dem Ausgangsaktivsauerstoffgehalt und dem Aktivsauerstoffgehalt nach 8 Wochen wird der Erhalt des Aktivsauerstoffgehalts in % ermittelt.

### Vergleichsbeispiel

Nach dem in EP-B 0 716 640 beschriebenen Verfahren wurden einer Wirbelschichtsprühgranulation aus wässriger Wasserstoffperoxidlösung und wässriger Sodalösung bei einer Wirbelschichttemperatur von 50 bis 70 °C ein Natriumpercarbonatgranulat mit einem mittleren Teilchendurchmesser von 0,75 mm und einem Feinkornanteil von kleiner 0,2 mm von weniger als 2 % hergestellt.

Das Granulat wurde nach dem in EP-B 0 863 842 in Abschnitt [0021] beschriebenen Verfahren durch Aufsprühen einer 20 Gew.-% Natriumsulfatlösung in einer Wirbelschicht bei einer Wirbelschichttemperatur von 50 bis 70 °C mit einer Natriumsulfatschicht umhüllt. Die Menge der Natriumsulfatlösung wurde dabei so gewählt, dass 6 Gew.-% Natriumsulfat, bezogen auf die eingesetzte Granulatmenge, aufgetragen wurden.

Das mit Natriumsulfat umhüllte Natriumpercarbonatgranulat wies einen Aktivsauerstoffgehalt von 13,7 Gew.-% auf. Bei der TAM-Messung zeigte das Granulat nach 48 Stunden bei 40 °C eine Wärmefreisetzung von 2,2 µW/g. Die Lösezeit des Granulats bei 15 °C in Wasser wurde zu 1,5 Minuten bestimmt.

Nach Lagerung in einer Waschmittelmischung für acht Wochen bei 35 °C und 80 % relativer Feuchte betrug der Restgehalt an Aktivsauerstoff 67 % der Einsatzmenge.

### Beispiel:

1000 g des im Vergleichsbeispiel hergestellten, mit Natriumsulfat umhüllten Natriumpercarbonatgranulats wurden in einem Labor-Coater Strea-1 der Firma Aeromatic vorgelegt und mit Fluidisierungsluft von 70 °C in einer Wirbelschicht gehalten. In die Wirbelschicht wurde eine 2 Gew.-% wässrige Lösung von Natriumdodecylbenzolsulfonat (Lutensit A-LBN der Firma BASF) über eine Zweistoffdüse versprüht. Die Menge der Tensidlösung wurde so gewählt, dass 2 Gew.-% Tensid bezogen auf die eingesetzte Granulatmenge aufgebracht wurden. Nach dem Aufsprühen der Tensidlösung wurde noch 30 Minuten bei 70 °C in der Wirbelschicht getrocknet.

Das erhaltene, erfindungsgemäß umhüllte Natriumpercarbonatgranulat hatte einen Aktivsauerstoffgehalt von 13,6 Gew.-%. Bei der TAM-Messung zeigte das Granulat nach 48 Stunden bei 40 °C eine Wärmefreisetzung von 2,1 µW/g. Die Lösezeit des Granulats bei 15 °C in Wasser wurde zu 1,5 Minuten bestimmt.

Nach Lagerung in einer Waschmittelmischung für acht Wochen bei 35 °C und 80 % relativer Feuchte, betrug der Restgehalt an Aktivsauerstoff 88 % der Einsatzmenge.

## Patentansprüche

1. Umhülltes Natriumpercarbonatgranulat mit verbesserter Lagerstabilität, umfassend
a) einen durch Wirbelschichtsprühgranulation hergestellten Kern, enthaltend als Hauptbestandteil Natriumpercarbonat,
b) eine innere Hüllschicht, enthaltend als Hauptbestandteil ein anorganisches, hydratbildendes Salz und
c) eine äußere Hüllschicht, enthaltend als Hauptbestandteil mindestens ein Tensid, das im Molekül ein oder mehrere Sulfat- oder Sulfonatgruppen in Form eines Alkalimetall-, Erdalkalimetall- oder Ammoniumsalzes enthält.

2. Natriumpercarbonatgranulat nach Anspruch 1,
**dadurch gekennzeichnet,**
**dass** der Anteil des Kerns am umhüllten Granulat im Bereich von 80 bis 99,5 Gew.-% liegt.

3. Natriumpercarbonatgranulat nach einem der vorhergehenden Ansprüche,
**dadurch gekennzeichnet,**
**dass** der Anteil von Natriumpercarbonat im Kern mehr als 80 Gew.-% beträgt.

4. Natriumpercarbonatgranulat nach einem der vorhergehenden Ansprüche,
**dadurch gekennzeichnet,**
**dass** der Kern weniger als 1 Gew.-% organische Kohlenstoffverbindungen enthält.

5. Natriumpercarbonatgranulat nach einem der vorhergehenden Ansprüche,
**dadurch gekennzeichnet,**
**dass** der Kern ein Alkalimetallsilikat in einer Menge von 0,1 bis 1 Gew.-% enthält.

6. Natriumpercarbonat nach Anspruch 5,
**dadurch gekennzeichnet,**
**dass** der Kern eine Magnesiumverbindung in einer Menge von 50 bis 2000 ppm Mg²⁺ enthält.

7. Natriumpercarbonatgranulat nach nach einem der vorhergehenden Ansprüche,
**dadurch gekennzeichnet,**
**dass** der Anteil der inneren Hüllschicht am umhüllten Granulat im Bereich von 1 bis 10 Gew.-% liegt.

8. Natriumpercarbonatgranulat nach einem der vorhergehenden Ansprüche,
**dadurch gekennzeichnet,**
**dass** der Anteil an anorganischem, hydratbildenden Salz in der inneren Hüllschicht mindestens 50 Gew.-% beträgt.

9. Natriumpercarbonatgranulat nach einem der vorhergehenden Ansprüche,
**dadurch gekennzeichnet,**
**dass** das anorganische, hydratbildende Salz der inneren Hüllschicht ausgewählt wird aus Natriumsulfat, Natriumcarbonat, Natriumhydrogencarbonat oder Magnesiumsulfat, sowie Mischungen oder Mischsalzen dieser Verbindungen.

10. Natriumpercarbonatgranulat nach Anspruch 9,
**dadurch gekennzeichnet,**
**dass** die innere Hüllschicht Natriumsulfat als anorganisches, hydratbildendes Salz enthält.

11. Natriumpercarbonatgranulat nach nach einem der vorhergehenden Ansprüche,
**dadurch gekennzeichnet,**
**dass** der Anteil der äußeren Hüllschicht am umhüllten Granulat im Bereich von 0,1 bis 10 Gew.-% liegt.

12. Natriumpercarbonatgranulat nach einem der vorhergehenden Ansprüche,
**dadurch gekennzeichnet,**
**dass** der Tensidanteil in der äußeren Hüllschicht mindestens 50 Gew.-% beträgt.

13. Natriumpercarbonatgranulat nach Anspruch 12,
**dadurch gekennzeichnet,**
**dass** die äußere Hüllschicht eine Mischung von Tensiden enthält, wobei die Tensidmischung zu mehr als 50 Gew.-% aus Tensiden besteht, die im Molekül ein oder mehrere Sulfat- oder Sulfonatgruppen in Form eines Alkalimetall-, Erdalkalimetall- oder Ammoniumsalzes enthalten.

14. Natriumpercarbonatgranulat nach einem der vorhergehenden Ansprüche,
**dadurch gekennzeichnet,**
**dass** in der äußeren Hüllschicht die Sulfat- oder Sulfonatgruppen des Tensids in Form des Natriumsalzes vorliegen.

15. Natriumpercarbonatgranulat nach einem der vorhergehenden Ansprüche,
**dadurch gekennzeichnet,**
**dass** es über der inneren Hüllschicht eine zusätzliche Hüllschicht aufweist, die als Hauptbestandteil ein Alkalimetallsilikat mit einem Modul SiO₂ zu Alkalimetalloxid von mehr als 2,5 enthält.

16. Natriumpercarbonatgranulat nach Anspruch 15,
**dadurch gekennzeichnet,**
**dass** der Anteil der zusätzlichen Hüllschicht am umhüllten Granulat im Bereich von 0,2 bis 3 Gew.-% liegt.

17. Natriumpercarbonatgranulat nach einem der vorhergehenden Ansprüche,
**dadurch gekennzeichnet,**
**dass** es eine mittlere Partikelgröße d₅₀ im Bereich von 0,3 bis 2 mm aufweist.

18. Natriumpercarbonatgranulat nach einem der vorhergehenden Ansprüche,
**dadurch gekennzeichnet,**
**dass** mehr als 90 Gew.-% der Granulatpartikel einen Durchmesser von über 0,2 mm aufweisen.

19. Verfahren zur Herstellung von umhülltem Natriumpercarbonatgranulat mit verbesserter Lagerstabilität, umfassend die Schritte
a) Herstellen eines Kernmaterials durch Wirbelschichtsprühgranulation, wobei eine wässrige Wasserstoffperoxidlösung und eine wässrige Sodalösung in eine Wirbelschicht aus Natriumpercarbonatpartikeln versprüht wird,
b) Aufbringen einer inneren Hüllschicht auf das Kernmaterial aus Schritt a) durch Aufsprühen einer wässrigen Lösung, in der mindestens ein hydratbildendes, anorganisches Salz gelöst ist und
c) Aufbringen einer äußeren Hüllschicht auf das umhüllte Material aus Schritt b) durch Aufsprühen einer wässrigen Mischung, in der mindestens ein Tensid gelöst oder emulgiert ist, das im Molekül ein oder mehrere Sulfat- oder Sulfonatgruppen in Form eines Alkalimetall-, Erdalkalimetall- oder Ammoniumsalzes enthält.

20. Verfahren nach Anspruch 19,
**dadurch gekennzeichnet,**
**dass** das hydratbildende, anorganische Salz in Schritt b) Natriumsulfat ist.

21. Verfahren nach Anspruch 19,
**dadurch gekennzeichnet,**
**dass** in den Schritten b) und c) das Aufbringen der Hullschicht durch Versprühen in einer Wirbelschicht erfolgt.

22. Verfahren nach Anspruch 21,
**dadurch gekennzeichnet,**
**dass** das Aufbringen der Hullschicht bei einer Temperatur in der Wirbelschicht im Bereich von 30 bis 90°C erfolgt.

23. Verwendung eines Natriumpercarbonatgranulats nach einem der Anspruche 1 bis 18 als Bleichmittel.

24. Verwendung eines Natriumpercarbonatgranulats nach einem der Ansprüche 1 bis 18 als bleichwirksamer Bestandteil in Wasch- und Reinigungsmitteln.

25. Bleichmittel enthaltend 15 bis 99 Gew.-% Natriumpercarbonatgranulat nach einem der Anspruche 1 bis 18.

26. Wasch- und Reinigungsmittel enthaltend 1 bis 40 Gew.-% Natriumpercarbonatgranulat nach einem der Ansprüche 1 bis 18.

## Claims

1. Coated sodium percarbonate granules with improved storage stability, comprising
a) a core produced by fluidised bed spray granulation, containing sodium percarbonate as its main component,
b) an inner coating layer containing an inorganic, hydrate-forming salt as its main component and
c) an outer coating layer containing as its main component at least one surfactant containing in the molecule one or more sulfate or sulfonate groups in the form of an alkali metal, alkaline-earth metal or ammonium salt.

2. Sodium percarbonate granules according to claim 1,
**characterised in that**
the proportion of the core in the coated granules is in the range from 80 to 99 5 wt.%.

3. Sodium percarbonate granules according to one of the preceding claims,
**characterised in that**
the proportion of sodium percarbonate in the core is more than 80 wt.%.

4. Sodium percarbonate granules according to one of the preceding claims,
**characterised in that**
the core contains less than 1 wt.% of organic carbon compounds.

5. Sodium percarbonate granules according to one of the preceding claims,
**characterised in that**
the core contains an alkali metal silicate in a quantity of 0.1 to 1 wt.%.

6. Sodium percarbonate according to claim 5,
**characterised in that**
the core contains a magnesium compound in a quantity of 50 to 2000 ppm Mg²⁺.

7. Sodium percarbonate granules according to one of the preceding claims,
**characterised in that**
the proportion of the inner coating layer in the coated granules is in the range from 1 to 10 wt.%.

8. Sodium percarbonate granules according to one of the preceding claims,
**characterised in that**
the proportion of inorganic, hydrate-forming salt in the inner coating layer is at least 50 wt.%.

9. Sodium percarbonate granules according to one of the preceding claims,
**characterised in that**
the inorganic, hydrate-forming salt in the inner coating layer is selected from sodium sulfate, sodium carbonate, sodium hydrogen carbonate or magnesium sulfate, and mixtures or mixed salts of these compounds.

10. Sodium percarbonate granules according to claim 9,
**characterised in that**
the inner coating layer contains sodium sulfate as the inorganic, hydrate-forming salt.

11. Sodium percarbonate granules according to one of the preceding claims,
**characterised in that**
the proportion of the outer coating layer in the coated granules is in the range from 0.1 to 10 wt.%.

12. Sodium percarbonate granules according to one of the preceding claims,
**characterised in that**
the proportion of surfactant in the outer coating layer is at least 50 wt.%.

13. Sodium percarbonate granules according to claim 12,
**characterised in that**
the outer coating layer contains a blend of surfactants, the surfactant blend consisting of more than 50 wt.% of surfactants that contain in the molecule one or more sulfate or sulfonate groups in the form of an alkali metal, alkaline-earth metal or ammonium salt.

14. Sodium percarbonate granules according to one of the preceding claims,
**characterised in that**
in the outer coating layer the sulfate or sulfonate groups in the surfactant are in the form of the sodium salt.

15. Sodium percarbonate granules according to one of the preceding claims,
**characterised in that**
on top of the inner coating layer they display an additional coating layer, which contains as its main component an alkali metal silicate having a modulus of SiO₂ to alkali metal oxide of over 2.5.

16. Sodium percarbonate granules according to claim 15,
**characterised in that**
the proportion of the additional coating layer in the coated granules is in the range from 0.2 to 3 wt.%.

17. Sodium percarbonate granules according to one of the preceding claims,
**characterised in that**
they display an average particle size d₅₀ in the range from 0.3 to 2 mm.

18. Sodium percarbonate granules according to one of the preceding claims,
**characterised in that**
more than 90 wt.% of the granule particles display a diameter of over 0.2 mm.

19. Process for the production of coated sodium
percarbonate granules with improved storage stability, comprising the following steps:
a) production of a core material by fluidised bed spray granulation, wherein an aqueous hydrogen peroxide solution and an aqueous soda solution are sprayed into a fluidised bed comprising sodium percarbonate particles,
b) application of an inner coating layer onto the core material from step a) by spraying an aqueous solution, in which at least one hydrate-forming, inorganic salt is dissolved and
c) application of an outer coating layer onto the coated material from step b) by spraying an aqueous mixture in which at least one surfactant is dissolved or emulsified, which contains in the molecule one or more sulfate or sulfonate groups in the form of an alkali metal, alkaline-earth metal or ammonium salt.

20. Process according to claim 19,
**characterised in that**
the hydrate-forming, inorganic salt in step b) is sodium sulfate.

21. Process according to claim 19,
**characterised in that**
in steps b) and c) the coating layer is applied by spraying in a fluidised bed.

22. Process according to claim 21,
**characterised in that**
the coating layer is applied at a temperature in the fluidised bed in the range from 30 to 90°C.

23. Use of sodium percarbonate granules according to one of claims 1 to 18 as bleaching agents.

24. Use of sodium percarbonate granules according to one of claims 1 to 18 as an active bleaching component in detergents and cleaning agents.

25. Bleaching agents containing 15 to 99 wt.% sodium percarbonate granules according to one of claims 1 to 18.

26. Detergents and cleaning agents containing 1 to 40 wt.% sodium percarbonate granules according to one of claims 1 to 18.

## Revendications

1. Granulés de percarbonate de sodium enrobés avec une stabilité de stockage améliorée, comprenant :
(a) un noyau fabriqué en effectuant une granulation par pulvérisation sur lit fluidisé, contenant comme composé principal du percarbonate de sodium,
(b) une couche d'enrobage interne, comprenant comme composé principal un sel anorganique formant des hydrates, et
(c) une couche d'enrobage externe, comprenant comme composé principal au moins un agent tensioactif, qui sous forme moléculaire contient un ou plusieurs groupements sulfate ou sulfonate constituant un sel de métal alcalin, de métal alcalinoterreux ou d'ammonium.

2. Granulés de percarbonate de sodium selon la revendication 1,
**caractérisés en ce que**
la proportion du noyau dans les granulés enrobés est comprise entre 80 et 99,5 % en poids.

3. Granulés de percarbonate de sodium selon l'une quelconque des revendications précédentes,
**caractérisés en ce que**
la proportion de percarbonate de sodium dans le noyau est supérieure à 80%.

4. Granulés de percarbonate de sodium selon l'une quelconque des revendications précédentes,
**caractérisés en ce que**
le noyau contient moins de 1 % en poids de composés carbonés organiques.

5. Granulés de percarbonate de sodium selon l'une quelconque des revendications précédentes,
**caractérisés en ce que**
le noyau contient un silicate de métal alcalin en quantité comprise entre 0,1 et 1 % en poids.

6. Percarbonate de sodium selon la revendication 5,
**caractérisé en ce que**
le noyau contient un composé de magnésium en quantité comprise entre 50 et 2 000 ppm de Mg²⁺.

7. Granulés de percarbonate de sodium selon l'une quelconque des revendications précédentes,
**caractérisés en ce que**
la proportion de la couche d'enrobage interne dans les granulés enrobés est comprise entre 1 et 10 % en poids.

8. Granulés de percarbonate de sodium selon l'une quelconque des revendications précédentes,
**caractérisés en ce que**
la proportion de sel anorganique formant des hydrates dans la couche d'enrobage interne est au moins égale à 50 %.

9. Granulés de percarbonate de sodium selon l'une quelconque des revendications précédentes,
**caractérisés en ce que**
le sel anorganique formant des hydrates de la couche d'enrobage interne est choisi parmi le sulfate de sodium, le carbonate de sodium, l'hydrogénocarbonate de sodium ou le sulfate de magnésium, ainsi que dans des mélanges ou des mélanges de sels de ces composés.

10. Granulés de percarbonate de sodium selon la revendication 9,
**caractérisés en ce que**
la couche d'enrobage interne contient du sulfate de sodium comme sel anorganique formant des hydrates.

11. Granulés de percarbonate de sodium selon l'une quelconque des revendications précédentes,
**caractérisés en ce que**
la proportion de la couche d'enrobage externe dans les granulés enrobés est comprise entre 0,1 et 10%.

12. Granulés de percarbonate de sodium selon l'une quelconque des revendications précédentes,
**caractérisés en ce que**
la proportion d'agent tensioactif dans la couche d'enrobage externe est au moins égale à 50 %.

13. Granulés de percarbonate de sodium selon la revendication 12,
**caractérisés en ce que**
la couche d'enrobage externe contient un mélange d'agents tensioactifs, dans laquelle le mélange d'agents tensioactifs est composé de plus de 50 % d'agents tensioactifs, qui sous forme moléculaire contiennent un ou plusieurs groupements sulfate ou sulfonate constituant un sel de métal alcalin, de métal alcalinoterreux ou d'ammonium.

14. Granulés de percarbonate de sodium selon l'une quelconque des revendications précédentes,
**caractérisés en ce que**
dans la couche d'enrobage externe, les groupements sulfate ou sulfonate de l'agent tensioactif se trouvent sous forme de sels de sodium.

15. Granulés de percarbonate de sodium selon l'une quelconque des revendications précédentes,
**caractérisés en ce que**
la couche d'enrobage interne est recouverte d'une couche d'enrobage supplémentaire qui contient comme composant principal un silicate de métal alcalin présentant un module silicique SiO₂ / oxyde de métal alcalin supérieur à 2,5.

16. Granulés de percarbonate de sodium selon la revendication 15,
**caractérisés en ce que**
la proportion de la couche d'enrobage supplémentaire dans les granulés enrobés est de 0,2 à 3 %.

17. Granulés de percarbonate de sodium selon l'une quelconque des revendications précédentes,
**caractérisés en ce qu'**
ils présentent une taille particulaire moyenne d₅₀ comprise entre 0,3 et 2 mm.

18. Granulés de percarbonate de sodium selon l'une quelconque des revendications précédentes,
**caractérisés en ce que**
plus de 90 % des particules des granulés présentent un diamètre supérieur à 0,2 mm.

19. Procédé de fabrication de granulés de percarbonate de sodium enrobés avec une stabilité de stockage améliorée, comprenant les étapes suivantes :
a) fabrication d'un matériau du noyau en effectuant une granulation par pulvérisation sur lit fluidisé, au cours de laquelle une solution aqueuse de peroxyde d'hydrogène et une solution aqueuse de soude sont pulvérisées dans un lit fluidisé de particules de percarbonate de sodium,
b) application d'une couche d'enrobage interne sur le matériau du noyau de l'étape a) par vaporisation d'une solution aqueuse dans laquelle au moins un sel anorganique formant des hydrates est dissous, et
c) application d'une couche d'enrobage externe sur le matériau enrobé de l'étape b) par vaporisation d'un mélange aqueux dans lequel au moins un agent tensioactif en solution ou en émulsion, contient sous forme moléculaire un ou plusieurs groupements sulfate ou sulfonate constituant un sel de métal alcalin, de métal alcalinoterreux ou d'ammonium.

20. Procédé selon la revendication 19,
**caractérisé en ce que**
le sel anorganique formant des hydrates de l'étape b) est du sulfate de sodium.

21. Procédé selon la revendication 19,
**caractérisé en ce que**
dans les étapes b) et c), l'application de la couche d'enrobage par pulvérisation est effectuée dans un lit fluidisé.

22. Procédé selon la revendication 21,
**caractérisé en ce que**
l'application de la couche d'enrobage est effectuée dans le lit fluidisé à une température comprise entre 30 et 90 °C.

23. Utilisation de granulés de percarbonate de sodium selon l'une quelconque des revendications 1 à 18, comme décolorant.

24. Utilisation de granulés de percarbonate de sodium selon l'une quelconque des revendications 1 à 18, comme composant blanchissant dans les détergents et des produits d'entretien.

25. Décolorant contenant 15 à 99 % en poids de granulés de percarbonate de sodium selon l'une quelconque des revendications 1 à 18.

26. Détergent et produit d'entretien contenant 1 à 40 % en poids de granulés de percarbonate de sodium selon l'une quelconque des revendications 1 à 18.
